# EUROPÄISCHE PATENTSCHRIFT

(11) **EP 1 556 429 B1**
(45) Veröffentlichungstag und Bekanntmachung des Hinweises auf die Patenterteilung: **23.11.2011**
(21) Anmeldenummer: 03750695.3
(22) Anmeldetag: 08.10.2003
(51) Int. Cl.: C08G 18/10, C08G 18/42, C08G 18/48

(54) **POLYURETHANELASTOMERE, VERFAHREN ZU IHRER HERSTELLUNG UND IHRE VERWENDUNG**
POLYURETHANE ELASTOMERS, METHOD FOR THE PRODUCTION THEREOF AND USE OF THE SAME
POLYURETHANES-ELASTOMERES, LEUR PROCEDE DE PRODUCTION ET LEUR UTILISATION

(30) Priorität: 21.10.2002 DE 10248949
(43) Veröffentlichungstag der Anmeldung: 27.07.2005
(73) Patentinhaber: Bayer MaterialScience AG, 51368 Leverkusen (DE)
(72) Erfinder: MICHELS, Erhard, 51061 Köln (DE); NEFZGER, Hartmut, 50259 Pulheim (DE); SCHLEIERMACHER, Stephan, 41539 Dormagen (DE)
(86) Internationale Anmeldenummer: PCT/EP2003/011107
(87) Internationale Veröffentlichungsnummer: WO 2004/037882

(56) Entgegenhaltungen:
- EP-A- 0 749 995
- DE-A- 3 437 915
- US-A- 3 370 996

## Beschreibung

Die Erfindung betrifft Polyurethanelastomere mit definierter Knotendichte, ein Verfahren zu ihrer Herstellung unter Einsatz von speziellen Polyetheresterpolyolen und ihre Verwendung, insbesondere zur Herstellung von mikrozellularen und massiven Polyurethanelastomerteilen.

In der Vergangenheit wurden bereits verschiedene Verfahren beschrieben, um Polyurethane herzustellen, die im sogenannten Weichsegment gleichzeitig sowohl Polyethergruppen als auch Polyestergruppen enthalten.

Eine Variante besteht darin (Plominska-Michalak, B.; Lisoska, R.; Balas, A. Journal of Elastomers and Plastics (26) 1994 327-334.), ein polyetherbasiertes NCO-Prepolymer mit einem Polyesterpolyol umzusetzen. Im resultierenden Polyurethanelastomer wird sowohl der Abrieb verringert, die Dauerbiegefestigkeit bei Raumtemperatur und -15°C verbessert als auch die Viskosität des NCO-Prepolymers im Vergleich zu einem polyesterbasierten NCO-Prepolymer verringert. Nachteilig ist jedoch, dass infolge des großen Viskositätsunterschieds der Reaktionskomponenten zueinander die störungsfreie Vermischung der Komponenten erschwert wird. Weiterhin nachteilig ist die inhärente Gefahr von Mikrophasenseparationen im sogenannten Weichsegment des Polyurethanelastomers, die sich nachteilig auf die Endeigenschaften auswirken.

Eine andere Variante (DE-A 199 27 188) schlägt vor, Polyether und Polyester in der Polyolformulierung physikalisch zu mischen. Auf diesem Wege können gegenüber reinen Polyetherpolyurethanen Polyurethane mit verbesserter Ölbeständigkeit erhalten werden. Nachteilig sind die mangelhafte Lagerfähigkeit der Polyolformulierungen, weil sie sich aufgrund der geringen Verträglichkeit von Polyestern und Polyethern nach relativ kurzer Zeit makroskopisch entmischen. Dem Anwender eines solchen Systems entstehen in unerwünschter Weise Erschwernisse bezüglich Lagerhaltung und Logistik.

Die zuvor erwähnten Nachteile werden mit separationstabilen Polyetheresterpolyolen umgangen, die sich durch diskontinuierliche Syntheseverfahren herstellen lassen: Insertion in Polyether, Alkoxylieren eines Polyesters mit Alkylenoxid, Polykondensation mit Alkylenoxid, zweistufige und einstufige Polykondensation.

In der Praxis zeigt sich jedoch, dass derartige Polyetheresterpolyole keine PU mit generell guten Dauerbiegefestigkeiten liefern, insbesondere wenn sie einer Hydrolysealterung ausgesetzt waren.

In US-A 5 436 314 (Insertion in Polyether) setzt man Carbonsäuren oder Carbonsäureanhydride in Gegenwart starker Brönstedsäuren mit Polyetherpolyolen um und erhält Polyetheresterpolyole mit statistisch verteilten Estergruppen. Allerdings besitzen diese Produkte keine unterschiedlich langen Polymethylensegmente, obwohl sie in vielen Polyesten wesentlich zu deren guten Eigenschaften beitragen. Weiterhin verunreinigen die Metallsalze starker Brönstedsäuren die polyetherester und mindern die Stabilität ihrer Esterbindungen gegen Hydrolyse, so dass ihr Einsatz z.B. in Schuhsohlen zu minderwertigen Materialien führt.

Beim Alkoxylieren eines Polyesters mit Alkylenoxid werden zunächst Polyester hergestellt und dann mit Alkylenoxid alkoxyliert. Diese Methode ist weit verbreitet und führt zu 3-Blockcopolymeren, den Polyester-block-polyether-polyolen. Ein immanenter Nachteil des Verfahrens ist, dass die aufwendig erzeugte Blockstruktur der Polyether-block-polyester-polyole nicht im Umesterungsgleichgewicht steht. Deshalb können sie bei erhöhter Temperatur umlagern und ihren strukturellen Aufbau verlieren. Dies wirkt sich in unerwünschter Weise auf ihre Lagerstabilität aus.

In DE-A 198 58 104 wird in der ersten Stufe eine Polyestercarbonsäure aus Ringestern, Alkoholen und Carbonsäuren synthetisiert und im Folgeschritt mit Ethylenoxid oder Propylenoxid bevorzugt ohne zusätzliche Katalysatoren alkoxyliert. Die Produkte dienen als Rohstoffe für Hartschäume. Dort verringern sie den Schrumpf, erhöhen die Festigkeit und verringern die Kristallisationsneigung. Diese Vorteile lassen sich jedoch nur verwirklichen, wenn mindestens eine Polyolkomponente oder ein Isocyanat eine zahlenmittlere Funktionalität deutlich über 2 besitzt, die es erlaubt ein hochvernetztes Polyurethansystem aufzubauen. Wie allgemein in der Technik bekannt, lassen sich mikrozellulare Elastomere mit guten Eigenschaften, wie z.B. guter Dauerbiegefestigkeit, auf diesem Wege nicht erhalten. Des weiteren sind die Ringester, aus denen die Polyesterpolyole des ersten Syntheseschrittes synthetisiert werden, nicht ohne erhöhten Aufwand herstellbar, weil sie erst aus Gemischen linearer und cyclischer Ester durch Extraktion oder Destillation gewonnen werden müssen, was ein großer Nachteil dieses Verfahrens ist.

In US-A 4 487 853 werden als Zwischenstufe Säurehalbester hergestellt, indem Polyetherpolyole mit Carbonsäureanhydriden verestert werden, anschließend ethoxyliert wird mit Katalyse durch Amine oder Zinnverbindungen, wobei estergruppenarme Polyester-co-polyether-polyole mit hohem Anteil primärer Hydroxylendgruppen erhalten werden. Nachteilig ist allerdings, dass die Ethergruppen in sehr hohem Überschuss gegenüber Estergruppen eingesetzt werden, so dass sich die Vorteile typischer Polyetheresterpolyole oder Polyester-block-polyether-polyole nicht vollständig ergeben. Weiterhin müssen zur Synthese von Adipinsäureestern, die wichtige Rohstoffe für Polyurethanelastomere darstellen, meist teure Dicarbonsäureanhydride als Edukte verwendet werden.

In WO 200127185 werden Doppelmetallcyanidkatalysatoren eingesetzt. Sie erlauben Etherblöcke mit wenigen Nebenprodukten und ungesättigten Endgruppen auf Polyesterolen zu starten. Die Produkte besitzen eine gute Mischbarkeit mit Ethern und Estern, die sie als Tenside oder Phasenvermittler empfiehlt. Als Nachteil ergibt sich allerdings, dass mit Doppelmetallcyanidkatalysatoren bekanntermaßen keine Polyether mit hoher Anzahl an primären Hydroxylendgruppen hergestellt werden können, weil die Ethylenoxidpolymerisation an wenigen Hydroxylfunktionen startet und dort hochmolekulare Polyethylenoxid-Einheiten aufbaut. Deshalb können die in WO 200127185 vorgestellten Polyester-block-polyether-polyole nur eingeschränkt in Polyolformulierungen angewendet werden und zwar dann, wenn Polyole mit mehrheitlich sekundären, wenig reaktiven Hydroxylgruppen für die Anwendung ausreichen. Für zahlreiche Anwendungen ist diese Einschränkung ein großer Nachteil.

In DE-A 21 10 278 (Polykondensation mit Alkylenoxid) reagieren Polyetherpolyol, Carbonsäureanhydrid und Alkylenoxid in einem Eintopfverfahren zum Polyetheresterpolyol mit statistisch verteilten Polyethereinheiten. Verfahrensbedingt bilden die Alkylenoxide nur derivatisierte Dimethylenbrücken. Längere Kohlenstoffbrücken, wie sie in Butandiol- oder Hexandiolestern eingesetzt werden, fehlen. Außerdem muss bei diesem Verfahren teures Adipinsäureanhydrid eingesetzt werden.

In DE-A 34 37 915 [Zweistufige Polykondensation] wird ein Polyetherpolyol mit einer Carbonsäure oder einem Carbonsäureanhydrid oder einem Carbonsäureester zu einer Polyestercarbonsäure umgesetzt, die in einem zweiten Schritt mit aliphatischen Alkoholen zum eigentlichen Polyetheresterpolyol reagiert. Nachteilig sind hierbei einerseits das mehrstufige Verfahren und zum anderen die teuren Carbonsäurederivate. Ein ähnliches Verfahren beschreibt DE-A 34 37 915. Hierbei wird eine herkömmliche Polyesterpolycarbonsäure nicht aus Polyetherpolyolen aufgebaut, sondern mit Polyetherpolyolen und aliphatischen Alkanolen zur Reaktion gebracht.

Nach EP-A 0 601 470 [Einstufige Polykondensation] kondensiert man Polycarbonsäuren, Alkandiolgemische und Polyetherpolyole zu statistisch verteilten Polyetheresterpolyolen mit einem Verhältnis von Ether zu Estergruppen im Polyetheresterpolyol von 0,3 bis 1,5. Der besondere Vorteil dieses Verfahrens liegt darin, dass mit diesen Polyetheresterpolyolen Polyurethanweichschäume mit verminderter Fogentwicklung hergestellt werden können. Hierbei werden die Polyetheresterpolyole mit Polyisocyanaten umgesetzt.

Die Aufgabe der vorliegenden Erfindung war es daher, mikrozellulare Polyurethane zur Verfügung zu stellen, die verbesserte Dauerbiegeeigenschaften sowohl bei Raumtemperatur und bei -15°C als auch nach einer Hydrolysealterung (bei 70°C und einer Luftfeuchtigkeit von 95 % für 7 Tage) aufweisen.

Überraschenderweise wurde gefunden, dass aus Alkanpolyolgemischen und speziellen Polyetherpolyolen bestehende Polyetheresterpolyole deren zahlenmittlere Funktionalität von 1,9 bis 2,5, bevorzugt 1,95 bis 2,1 und besonders bevorzugt 2,001 bis 2,08 liegt und deren Verhältnis von Ethergruppen zu Estergruppen bevorzugt von 0,3 bis 2,5, bevorzugt von 0,6 bis 2,0 und besonders bevorzugt von 0,9 bis 1,5 variieren kann, mit Polyisocyanaten zu hydrolysebeständigen Polyurethanelastomeren reagieren, die vor und nach Hydrolysealterung sehr gute Dauerbiegefestigkeiten besitzen, sofern die Knotendichte der Polyurethanelastomeren von 0,1 mol/kg bis 0,0001 mol/kg, bevorzugt von 0,08 bis 0,001 mol/kg, besonders bevorzugt von 0,04 bis 0,01 mol/kg liegt.

Unter der "Knotendichte der Polyurethanelastomeren" (Einheit: [mol/kg]) wird die Anzahl der dreiwertigen, permanenten chemischen Vernetzungsstellen des Polyurethanelastomeren in Mole pro Kilogramm PU-Elastomer verstanden. Hierzu werden die Stoffmengen aller Moleküle der Ausgangsrohstoffe des Polyurethanelastomers mit einer höheren Funktionalität als 2 erfasst. Um alle Vernetzungsstellen wie trifunktionelle Vernetzungsstellen behandeln zu können, werden die Funktionalitäten höherfunktioneller Molekülsorten unterschiedlich gewichtet: trifunktionelle Moleküle werden mit 1 gewichtet, tetrafunktionelle mit 2, pentafunktionelle mit 3, hexafunktionelle mit 4 u.s.w. Nach dieser Definition hätte ein Polyurethan aus den äquivalent verschäumten Komponenten Polyesterdiol, 1,4-Butandiol, Triethanolamin, Pentaerythrit mit einem Gemisch aus 1,21 Gew.-% 2,4'-Diphenylmethandiisocyanat und 98,79 Gew.% 4,4'-Diphenylmethandiisocyanat eine Elastomerknotendichte von 0,69 mol/kg, wie die Berechnung in der nachfolgenden Tabelle beispielhaft zeigt.

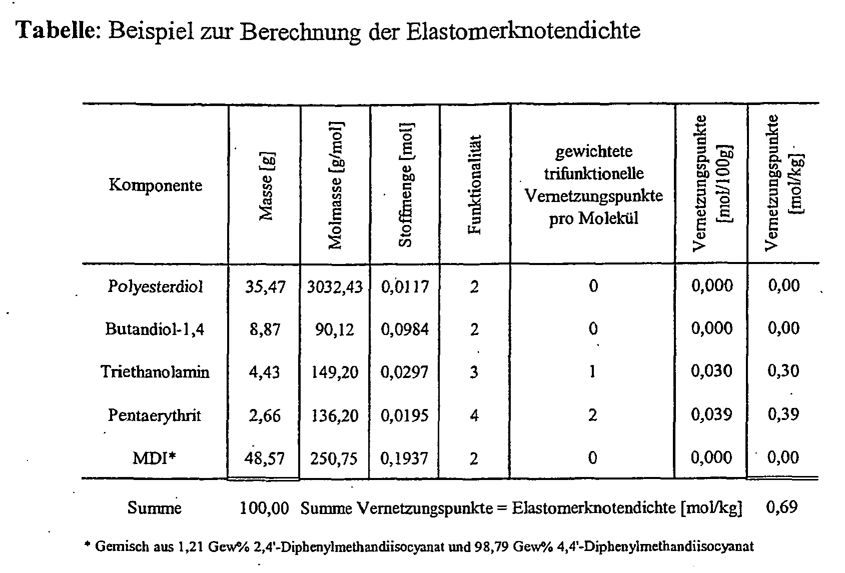

Gegenstand der Erfindung sind daher Polyurethanelastomere, die eine Knotendichte von 0,1 mol/kg bis 0,0001 mol/kg, bevorzugt von 0,08 bis 0,001 mol/kg, besonders bevorzugt von 0,04 bis 0,01 mol/kg aufweisen, erhältlich durch Umsetzung
- a): mindestens eines Polyetheresterpolyols mit einem zahlenmittleren Molekulargewicht von 1000 g/mol bis 6000 g/mol, bevorzugt von 2500 g/mol bis 5000 g/mol, einer zahlenmittleren Funktionalität von 1,9 bis 2,5, bevorzugt von 1,95 bis 2,1 und besonders bevorzugt von 2,001 bis 2,08, und einem Verhältnis von Ethergruppen zu Estergruppen des Polyetheresters von 0,3 bis 2,5, bevorzugt von 0,6 bis 2,0, besonders bevorzugt von 0,9 bis 1,5,
der erhältlich ist durch Polykondensation aus
- a1): mindestens einer oder mehreren Dicarbonsäuren mit bis zu 12 Kohlenstoffatomen und/oder deren Derivaten,
- a2): mindestens einem oder mehreren Polyetherpolyolen mit einem zahlenmittleren Molekulargewicht von 1000 g/mol bis 6000 g/mol, bevorzugt von 2500 g/mol bis 5000 g/mol, einer mittleren Funktionalität von 1,7 bis 2,5 sowie einem Anteil von 70 % bis 100 % primärer OH-Gruppen, bevorzugt 85% bis 96% primärer OH-Gruppen, und
- a3): mindestens einem oder mehreren Polyolen mit einem zahlenmittleren Molekulargewicht von 18 bis 750 g/mol, bevorzugt von 18 g/mol bis 400 g/mol, besonders bevorzugt von 62 g/ml bis 200 g/mol, einer zahlenmittleren Funktionalität von 2 bis 8 und mit mindestens 2 endständigen (primären) OH-Gruppen pro Molekül,
- b): gegebenenfalls Polymerpolyolen, die OH-Zahlen von 10 bis 149 und mittlere Funktionalitäten von 1,7 bis 4, bevorzugt von 1,8 bis 3,5 aufweisen und die 1 bis 50 Gew.-%, vorzugsweise 1 bis 45 Gew.-% Füllstoffe, bezogen auf das Polymerpolyol enthalten,
- c): niedermolekularen Kettenverlängerern mit mittleren Funktionalitäten von 1,8 bis 2,1 und mit einem zahlenmittleren Molekulargewicht von 18 g/mol bis 750 g/mol, bevorzugt von 18 g/mol bis 400 g/mol, besonders bevorzugt von 62 g/mol bis 200 g/mol und/oder Vernetzern mit mittleren Funktionalitäten von 2,2 bis 8, vorzugsweise 2,5 bis 4, und mit einem zahlenmittleren Molekulargewicht von 18 g/mol bis 750 g/mol, bevorzugt von 18 g/mol bis 400 g/mol, besonders bevorzugt von 62 g/mol bis 200 g/mol,
in Gegenwart von
- d): gegebenenfalls Katalysatoren,
- e): gegebenenfalls Treibmitteln und
- f): gegebenenfalls Zusatzstoffen, mit
- g): mindestens einem Polyisocyanat ausgewählt aus der Gruppe bestehend aus
- g1): organischen Polyisocyanaten,
- g2): modifizierten Polyisocyanaten und
- g3): NCO-Prepolymeren auf Basis von g1) und/oder g2) und einem Polyol x),
wobei das Polyol x) ausgewählt ist aus der Gruppe bestehend aus
- x1): Polyesterpolyolen,
- x2): Polyetheresterpolyolen und
- x3): Gemischen aus x1) und x2),

- g4): sowie Gemischen aus g1), g2) und g3).

Unter einem "Polyetheresterpolyol" wird eine Verbindung verstanden, die Ethergruppen, Estergruppen und OH-Gruppen aufweist.

Die erfindungsmäß zu verwendenden Polyetheresterpolyole a) weisen ein zahlenmittleres Molekulargewicht von 1000 g/mol bis 6000 g/mol, bevorzugt von 2500 g/mol bis 5000 g/mol auf, eine zahlenmittlere Hydroxylfunktionalität von 1,9 bis 2,5, bevorzugt von 1,95 bis 2,1 und besonders bevorzugt von 2,001 bis 2,08, und ein Verhältnis von Ethergruppen zu Estergruppen von 0,3 bis 2,5, bevorzugt von 0,6 bis 2,0 und besonders bevorzugt von 0,9 bis 1,5.

Organische Dicarbonsäuren a1) mit bis zu 12 Kohlenstoffatomen sind zur Herstellung der Polyetheresterpolyole geeignet, vorzugsweise aliphatische Dicarbonsäuren mit 4 bis 6 Kohlenstoffatomen, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure und Adipinsäure genannt. Als Derivate dieser Säuren können beispielsweise deren Anhydride sowie deren Ester und Halbester mit niedermolekularen, monofunktionellen Alkoholen mit 1 bis 4 Kohlenstoffatomen eingesetzt werden.

Als Komponente a2) zur Herstellung der Polyetheresterpolyole werden Polyetherpolyole eingesetzt, die man durch Alkoxylieren von Startermolekülen, bevorzugt mehrwertigen Alkoholen, erhält. Die Startermoleküle sind mindestens difunktionell, können aber gegebenenfalls auch Anteile höherfunktioneller insbesondere trifunktioneller Startermoleküle enthalten. Das Alkoxylieren erfolgt üblicherweise in zwei Schritten. Zuerst wird in Gegenwart basischer Katalysatoren oder Doppelmetallcyanid-Katalysatoren mit bevorzugt Propylenoxid oder weniger bevorzugt 1,2-Butylenoxid oder weniger bevorzugt 2,3-Butylenoxid alkoxyliert und danach mit Ethylenoxid ethoxyliert. Der Anteil von Ethylenoxid im Polyetherpolyol beträgt von 10 Gew.-% bis 40 Gew.-%, bevorzugt 15 Gew.-% bis 35 Gew.-%.

Zur Komponente a3) zählen vorzugsweise Diole mit primären OH-Gruppen und zahlenmittleren Molekulargewichten von ≤ 750 g/mol, bevorzugt von 18 g/mol bis 400 g/mol, besonders bevorzugt von 62 g/mol bis 200 g/mol; wie z.B. 1,2-ethandiol, 1,3-Propandiol, 1,4-Butandiol, 1,5-Pentendiol, 1,5-Pentandiol, Neopentylglykol, 1,6-Hexandiol, 1,7-Heptandiol, Octandiol-1,8, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole, wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol.

Neben den Diolen können auch Polyole mit zahlenmittleren Funktionalitäten von > 2 bis 8, bevorzugt von 2,1 bis 5, besonders bevorzugt von 3 bis 4 mitverwendet werden, z.B. 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten unter 750 g/mol, bevorzugt von 18 g/mol bis 400 g/mol, besonders bevorzugt von 62 g/mol bis 200 g/mol.

Aus der Gruppe der Diole kann jedes für sich einzeln oder in Kombination mit anderen Diolen und Polyolen eingesetzt werden. Die Di- und Polyole können auch nachträglich zu einem Polyesterpolyol zugesetzt werden, auch wenn sie dadurch nicht bzw. nicht bis zum Erreichen des Polykonsationsgleichgewichtes in der Veresterungsreaktion umgesetzt werden. Der relative Mengeneinsatz von Polyolen wird begrenzt durch die vorgegebene zahlenmittlere Hydroxylfunktionalität des Polyetheresterpolyols a).

Als Polymerpolyole b) eignen sich polymermodifizierte Polyole, insbesondere Pfropfpolymerpolyole auf Basis von Polyethern, Polyestern oder Polyetherestern. Als Pfropfkomponente eignen sich insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, hergestellt werden. Als Komponente b) eignen sich auch Polyol-Dispersionen, die als disperse Phase - üblicherweise in Mengen von 1 bis 50 Gew.-%, vorzugsweise 1 bis 45 Gew.-%, bezogen auf Polymerpolyol-Füllstoffe, z.B. anorganische Füllstoffe, Polyharnstoffe (PHD), Polyhydrazide, tert.-Aminogruppen gebunden enthaltende Polyurethane und/oder Melamin enthalten.

Zur Herstellung der erfindungsgemäßen Polyurethanelastomeren werden zusätzlich als Komponente c) niedermolekulare difunktionelle Kettenverlängerer, Vernetzer mit zahlenmittleren Funktionalitäten von 2,2 bis 8 oder Mischungen aus Kettenverlängerern und Vernetzern verwendet.

Derartige Kettenverlängerer und Vernetzer c) werden zur Modifizierung der mechanischen Eigenschaften, insbesondere der Härte der Polyurethanelastomeren eingesetzt. Geeignete Kettenverlängerer sind Verbindungen wie unter Komponente a3) beschrieben sowie Diester der Terephthalsäure mit Glykolen mit 2 bis 4 Kohlenstoffatomen, wie z.B. Terephthalsäure-bis-2-hydroxyethylester oder Terephthalsäure-bis-4-hydroxybutylester, Hydroxyalkylenether des Hydrochinons oder Resorcins, wie z.B. 1,4-Di-(β-hydroxyethyl)-hydrochinon oder 1,3-(β-Hydroxyethyl)-resorcin, N-Alkyldialkanolamine mit 2 bis 12 Kohlenstoffatomen, z.B. N-Methyl- und N-Ethyl-diethanolamin. Vernetzer sind zusätzlich zu den unter Komponente a3) genannten Vernetzungsmitteln, z.B. Triole, Tetraole, oligomere Polyalkylenpolyole, aromatische und aliphatische Amine und Diamine mit einer Funktionalität von 2,2 bis 8, bevorzugt von 3 bis 4, die üblicherweise Molekulargewichte von ≤ 750 g/mol besitzen, vorzugsweise von 18 bis 400 g/mol, besonders bevorzugt von 62 bis 200 g/mol.

Der relative Mengeneinsatz von Polyen und Tetraolen wird begrenzt durch die vorgegebene Knotendichte des erfindungsgemäßen Polyurethanelastomeren in Kombination mit der mittleren Hydroxylfunktionalität des Polyetheresterpolyols a).

Die Verbindungen der Komponente c) können in Form von Mischungen oder einzeln eingesetzt werden. Verwendbar sind auch Gemische aus Kettenverlängerern und Vernetzern.

Als Komponente d) können dem Fachmann geläufige Aminkatalysatoren eingesetzt werden, z.B. tertiäre Amine wie Triethylamin, Tributylamin, N-Methyl-morpholin, N-Ethyl-morpholin, N,N,N',N'-Tetramethyl-ethylendiamin, Pentamethyl-diethylentriamin und höhere Homologe, 1,4-Diaza-bicyclo-[2,2,2]-octan, N-Methyl-N'-dimethylaminoethyl-piperazin, Bis-(dimethylaminoalkyl)-piperazine, N,N-Dimethylbenzylamin, N,N-Dimethylcyclohexylamin, N,N-Diethylbenzylamim Bis-(N,N-diethylaminoethyl)adipat, N,N,N',N'-Tetramethyl-1,3-butandiamin, N,N-Dimethyl-β-phenyl-ethyl-amin, Bis-(dimethylaminopropyl)-harnstoff, Bis-(dimethylaminopropyl)-amin, 1,2-Dimethylimidazol, 2-Methylimidazol, Diazabicycloundecen, monocyclische und bicyclische Amidine, Bis-(dialkylamino)-alkylether, wie z.B. Bis(dimethylaminoethyl)ether, sowie Amidgruppen (vorzugsweise Formamidgruppen) aufweisende tertiäre Amine. Als Katalysatoren kommen auch an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, N-Nonylphenol oder Bisphenol A, in Frage. Gegenüber Isocyanatgruppen Zerewittinoff-aktive Wasserstoffatome aufweisende tertiäre Amine als Katalysator sind z.B. Triethanolamin, Triisopropanolamin, N-Methyl-diethanolamin, N-Ethyl-diethanolamin, N,N-Dimethylethanolamin, deren Umsetzungsprodukte mit Alkylenoxiden wie Propylenoxid und/oder Ethylenoxid sowie sekundär-tertiäre Amine. Als Katalysatoren können ferner Silaamine mit Kohlenstoff-Silizium-Bindungen eingesetzt werden, z.B. 2,2,4-Trimethyl-2-silamorpholin und 1,3-Diethyl-aminomethyl-tetramethyl-disiloxan. Weiterhin kommen auch stickstoffhaltige Basen wie Tetraalkylammoniumhydroxide, ferner Hexahydrotriazine in Betracht. Die Reaktion zwischen NCO-Gruppen und zerewitinoff-aktiven Wasserstoffatomen wird auch durch Lactame und Azalactame stark beschleunigt.

In Abwesenheit von Feuchtigkeit und physikalisch oder chemisch wirkenden Treibmitteln können kompakte Polyurethanelastomere, z.B. Polyurethanschuhaußensohlen hergestellt werden.

Zur Herstellung von mikrozellularen Polyurethanelastomeren findet als Treibmittel e) bevorzugt Wasser Verwendung, das mit der Isocyanatkomponente g) in situ unter Bildung von Kohlendioxid und Aminogruppen reagiert, die ihrerseits mit weiteren Isocyanatgruppen zu Harnstoffgruppen weiterreagieren und hierbei als Kettenverlängerer wirken.

Sofern der Polyurethan-Formulierung Wasser zugegeben wird, um die gewünschte Dichte einzustellen, wird dieses üblicherweise in Mengen von 0,001 bis 3,0 Gew.-%, vorzugsweise von 0,01 bis 2,0 Gew.-% und insbesondere von 0,05 bis 1,0 Gew.-%, bezogen auf das Gewicht der Komponenten a) bis f) verwendet.

Als Treibmittel e) können anstelle von Wasser oder vorzugsweise in Kombination mit Wasser auch Gase oder leicht flüchtige anorganische oder organische Substanzen, die unter dem Einfluss der exothermen Polyadditionsreaktion verdampfen und vorzugsweise einen Siedepunkt bei Normaldruck im Bereich von -40 bis 120°C, vorzugsweise von -30 bis 90°C besitzen, als physikalische Treibmittel eingesetzt werden. Als organische Treibmittel kommen z.B. Aceton, Ethylacetat, halogensubstituierte Alkane oder perhalogenierte Alkane, wie R134a, R141b, R365mfc, R245fa, ferner n-Butan, iso-Butan, iso-Pentan, n-Pentan, Cyclopentan, n-Hexan, iso-Hexan, Cyclohexan, n-Heptan, iso-Heptan oder Diethylether, als anorganische Treibmittel z.B. Luft, CO₂ oder N₂O, in Frage. Eine Treibwirkung kann auch durch Zusatz von Verbindungen erzielt werden, die sich bei Temperaturen oberhalb der Raumtemperatur unter Abspaltung von Gasen, beispielsweise von Stickstoff und/oder Kohlendioxid zersetzen, wie Azoverbindungen, z.B. Azodicarbonamid oder Azobisisobuttersäurenitril, oder Salzen wie Ammoniumbicarbonat, Ammoniumcarbamat oder Ammoniumsalzen organischer Carbonsäuren, z.B. Monoammoniumsalze der Malonsäure, Borsäure, Ameisensäure oder Essigsäure. Weitere Beispiele für Treibmittel sowie Einzelheiten über die Verwendung von Treibmitteln sind in R. Vieweg, A. Höchtlen (Hrsg.): "Kunststoff-Handbuch", Band VII, Carl-Hanser-Verlag, München 3. Auflage, 1993, S.115 bis 118, 710 bis 715 beschrieben.

Die zweckmäßig einzusetzende Menge an festen Treibmitteln, niedrigsiedenden Flüssigkeiten oder Gasen, die jeweils einzeln oder in Form von Mischungen, z.B. als Flüssigkeits- oder Gasmischungen oder als Gas-Flüssigkeitsmischungen eingesetzt werden können, hängt selbstverständlich von der angestrebten Dichte ab und der eingesetzten Menge an Wasser. Die erforderlichen Mengen können experimentell leicht ermittelt werden. Zufriedenstellende Ergebnisse liefern üblicherweise Feststoffmengen, Flüssigkeitsmengen und/oder Gasmengen von 0,01 bis 35 Gew.%, vorzugsweise 0,1 bis 6 Gew.-%, jeweils bezogen auf das Gewicht der Komponenten a) bis f). Die Gasbeladung mit z. B. Luft, Kohlendioxid, Stickstoff und/oder Helium kann sowohl über die höhermolekularen Polyhydroxylverbindungen a) und b), als auch über die Verbindungen d) und f) als auch über die Polyisocyanate g) erfolgen.

Die Reaktionsmischung zur Herstellung der kompakten oder zelligen Polyurethanelastomeren kann gegebenenfalls mit Zusatzstoffen f) versehen werden. Genannt seien beispielsweise oberflächenaktive Zusatzstoffe, wie Emulgatoren, Schaumstabilisatoren, Zellregler, Flammschutzmittel, Keimbildungsmittel, Oxidationsverzögerer, Stabilisatoren, Gleit- und Entformungsmittel, Farbstoffe, Dispergierhilfen und Pigmente. Als Emulgatoren kommen z.B. die Natriumsalze von Rieinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphtylmethandisulfonsäure oder von Fettsäuren wie Ricinolsäure oder von polymeren Fettsäuren können als oberflächenaktive Zusatzstoffe mitverwendet werden. Als Schaumstabilisatoren kommen vor allem Polyethersiloxane, speziell wasserlösliche Vertreter, in Frage. Diese Verbindungen sind im allgemeinen so aufgebaut, dass ein Copolymerisat aus Ethylenoxid und Propylenoxid mit einem Polydimethylsiloxanrest verbunden ist. Von besonderem Interesse sind vielfach über Allophanatgruppen verzweigte Polysiloxan-Polyoxyalkylen-Copolymere. Geeignet sind auch andere Organopolysiloxane, oxyethylierte Alkylphenole, oxyethylierte Fettalkohole, Paraffinöle, Rizinusöl- bzw. Ricinolsäureester, Türkischrotöl, Erdnussöl und Zellregler wie Paraffine, Fettalkohole und Polydimethylsiloxane. Zur Verbesserung der Emulgierwirkung, der Dispergierung des Füllstoffs, der Zellstruktur und/oder zu deren Stabilisierung eignen sich ferner oligomere Polyacrylate mit Polyoxyalkylen-und Fluoralkanresten als Seitengruppen. Die oberflächenaktiven Substanzen werden üblicherweise in Mengen von 0,01 bis 5 Gew.-Teilen, bezogen auf 100 Gew.-Teile der höhermolekularen Polyhydroxylverbindungen a) und b) angewandt. Zugesetzt werden können auch Reaktionsverzögerer, Antistatika, wie z.B. Catafor®Ca 100, ferner Pigmente oder Farbstoffe und an sich bekannte Flammschutzmittel, ferner Stabilisatoren gegen Alterungs- und Witterungseinflüsse, Weichmacher und fungistatisch und bakteriostatisch wirkende Substanzen.

Weitere Beispiele von gegebenenfalls mitzuverwendenden oberflächenaktiven Zusatzstoffen und Schaumstabilisatoren sowie Zellreglern, Reaktionsverzögerem, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind in R. Vieweg, A. Höchtlen (Hrsg.): "Kunststoff-Handbuch", Band VII, Carl-Hanser-Verlag, München, 3. Auflage, 1993, S.118 bis 124 beschrieben.

Als Komponente g1) eignen sich aliphatische, cycloaliphatische, araliphatische, aromatische und heterocyclische Polyisocyanate der Formel 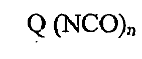 in der n = 2-7, vorzugsweise 2, und Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen, oder einen araliphatischen Kohlenwasserstoffrest mit 8 bis 15, vorzugsweise 8 bis 13 C-Atomen, bedeuten; z.B. sind 1,4-Tetramethylendiisocyanat, 1,6-Hexamethylendiisocyanat (HDI), 1,12-Dodecandiisocyanat, Cyclobutan-1,3-diisocyanat, Cyclohexan-1,3- und -1,4-diisocyanat, 1-Isocyanato-3,3,5-tri-methyl-5-isocyanatomethyl-cyclohexan (IPDI), 2,4- und 2,6-Hexahydrotoluylendiisocyanat, Hexahydro-1,3- und -1,4-phenylen-diisocyanat, Perhydro-2,4'- und -4,4'-diphenyl-methan-diisocyanat, 1,3-und 1,4-Phenylendiisocyanat, 1,4-Naphthalindiisocyanat (1,4-NDI), 1,5-Naphthalindiisocyanat (1,5-NDI), 1,4-Duroldiisocyanat (DDI), 4,4'-Stilbendiisocyanat, 3,3'-Dimethyl-4,4'-biphenylendiisocyanat (TODI), 2,4- und 2,6-Toluylendiisocyanat (TDI), Diphenylmethan-2,4'-, -2,2'- und -4,4'-diisocyanat (MDI) und höherkernige Vertreter der Diphenylmethandiisocyanat-Reihe, geeignet. Die genannten Verbindungen und ihre Isomeren können jeweils einzeln oder in Form von Mischungen eingesetzt werden.

Bevorzugt eingesetzt werden die technisch leicht zugänglichen Polyisocyanate, z.B. 2,4- und 2,6-Toluylendiisocyanat, Naphthylen-1,5-diisocyanat, 4,4'-Diphenylinethandiisocyanat, 2,4'-Diphenylmethandiisocyanat, 2,2'-Diphenylmethandiisocyanat und Polyphenyl-polymethylen-polyisocyanate, wie sie durch Anilin-Förmaldehyd-Kondensation und anschließende Phosgenierung hergestellt werden ("rohes MDI"), wobei die Polyisocyanate einzeln oder in Form von Mischungen eingesetzt werden können.

Besonders bevorzugt sind Gemische aus 4,4'-Diphenylmethandiisocyanat, 2,4'-Diphenylmethandiisocyanat.

Als modifizierte Isocyanate g2) kommen beispielsweise in Frage: Carbodiimidgruppen aufweisende Polyisocyanate, wie z.B. Bis(4,4'-diphenylmethan)carbodiimid, Allophanatgruppen aufweisende Polyisocyanate, Isocyanuratgruppen aufweisende Polyisocyanate, Urethangruppen aufweisende Polyisocyanate, acylierte Harnstoffgruppen aufweisende Polyisocyanate, Biuretgruppen aufweisende Polyisocyanate, durch Telomerisationsreaktionen hergestellte Polyisocyanate, Umsetzungsprodukte der obengenannten Isocyanate mit Acetalen und polymere Fettsäureester enthaltende Polyisocyanate.

Besonders bevorzugt sind solche modifizierten Polyisocyanate, die sich vom 2,4-und/oder 2,6-Toluylendiisocyanat, vom 4,4'- und/oder 2,4'-Diphenylmethandiisocyanat oder vom Naphthylen-1,5-diisocyanat ableiten und deren Gemische.

Die Polyetheresterpolyole x2) werden durch Kondensation von einer oder mehreren Dicarbonsäuren a1) mit mindestens einem oder mehreren Polyolen der Komponenten a3), c) und/oder anderen kurzkettigen Polyolen y) und mit mindestens einem oder mehreren langkettigen Polyolen der Komponenten a2) oder z) hergestellt.

Die Polyetheresterpolyole x2) können mit den Polyetheresterpolyolen a) identisch sein. Sie können jedoch auch auf Basis von Polyetherpolyolen oder Gemischen mehrerer Polyetherpolyole z) mit einem zahlenmittleren Molekulargewicht von 1000 g/mol bis 6000 g/mol, bevorzugt 2500 g/mol bis 5000 g/mol und einer mittleren Funktionalität von 1,7 bis 2,5 und weniger als 70 % primären OH-Gruppen hergestellt sein. Man erhält diese Polyetherpolyole z) durch Alkoxylieren von Startermolekülen, bevorzugt Alkoholen. Die Startermoleküle sind mindestens difunktionell, können aber gegebenenfalls auch Anteile höherfunktioneller, insbesondere trifunktioneller Startermoleküle enthalten. Das Alkoxylieren erfolgt in zwei Schritten. Zuerst wird unter basischer Katalyse oder unter Doppelmetallcyanid-Katalyse mit Propylenoxid, 1,2-Butylenoxid oder 2,3-Butylenoxid alkoxyliert und danach wird gegebenenfalls ethoxyliert. Der Anteil von Ethylenoxid im Polyether beträgt zwischen 0 Gew.-% und 10 Gew.-%.

Als Komponente y) können Vernetzer und Kettenverlängerer wie unter c) beschrieben und/oder Polyole mit einer mittleren Hydroxylfunktionalität von 2 bis 8, mit einer oder zwei sekundären Hydroxylgruppen und zahlenmittleren Molekulargewichten unter 750 g/mol eingesetzt werden. Zu ihnen zählen gesättigte und ungesättigte aliphatische Diole wie 1,2-Propandiol, 1,2-Butandiol, 1,3-Butandiol, Etherdiole wie Dipropylenglykol, Tripropylenglykol, Tetrapropylenglykol, Di-1,2-butylenglykol, Tri-1,2-butylenglykol, Tetra-1,2-butylenglykol, Di-1,3-butylenglykol, Tri-1,3-butylenglykol, Tetra-1,3-butylenglykol und deren Oligomerengemische.

Neben den Diolen können auch auf Triolen oder Tetraolen gestartete Polypropylenoxidpolyole z.B. 1,1,1-Trimethylolpropan, Triethanolamin, Glycerin und Pentaerythrit mit mittleren Molekulargewichten unter 750 g/mol verwendet werden.

Aus der Gruppe der Diole kann jedes für sich einzeln oder in Kombination mit weiteren Diolen und/oder höherwertigen Polyolen eingesetzt werden. Diese Di- oder Polyole können auch nachträglich zu einem Polyesterpolyol zugesetzt werden, auch gleichgewichtes in der Veresterungsreaktion umgesetzt werden. Der relative Mengeneinsatz von Polyolen wird begrenzt durch die vorgegebene zahlenmittlere Hydroxylfunktionalität des Polyetheresterpolyols x2) und die für das Polyurethanelastomer vorgegebene Knotendichte.

Die Polyesterpolyole x1) werden durch Kondensation von einer oder mehreren Dicarbonsäuren a1) mit mindestens einem Polyol oder mehreren Polyolen gemäß a3), c) und/oder y) hergestellt.

Ein weiterer Gegenstand der Erfindung ist ein Verfahren zur Herstellung der erfindungsgemäßen Polyurethanelastomeren, welches dadurch gekennzeichnet ist, dass
- a): mindestens eines Polyetheresterpolyols mit einem zahlenmittleren Molekulargewicht von 1000 g/mol bis 6000 g/mol einer zahlenmittleren Funktionalität von 1,9 bis 2,5 und einem Verhältnis von Ethergruppen zu Estergruppen des Polyetheresters von 0,3 bis 2,5,
der erhältlich ist durch Polykondensation aus
- a1): mindestens einer oder mehrerer Dicarbonsäuren mit bis zu 12 Kohlenstoffatomen und/oder deren Derivaten,
- a2): mindestens einem oder mehreren Polyetherpolyolen mit einem zahlenmittleren Molekulargewicht von 1000 g/mol bis 6000 g/mol, einer mittleren Funktionalität von 1,7 bis 2,5 sowie einem Anteil von 70 % bis 100 % primärer OH-Gruppen und
- a3): mindestens einem oder mehreren Polyolen mit einem zahlenmittleren Molekulargewicht von 18 bis 750 g/mol einer zahlenmittleren Funktionalität von 2 bis 8 und mit mindestens 2 endständigen OHGruppen pro Moleküle,
- b): gegebenenfalls Polymerpolyolen, die OH-Zahl von 10 bis 149 und mittlere Funktionalitäten von 1,7 bis 4, aufweisen und die mit 1 bis 50 Gew.-% Füllstoffe, bezogen auf das Polymerpolyol enthalten.
- c): niedermolekularen Kettenverlängerern mit mittleren Funktionalitäten von 1,8 bis 2,1 und mit einem zahlenmittleren Molekulargewicht von 18 bis 750 g/mol und/oder Vernetzern mit mittleren Funktionalitäten von 2,2 bis 8 und mit einem zahlenmittleren Molekulargewicht von 18 bis 750 g/mol,
in Gegenwart von
- d): gegebenenfalls Katalysatoren,
- e): gegebenenfalls Treibmitteln und
- f): gegebenenfalls Zusatzstoffen
mit
- g): mindestens einem Polyisocyanat ausgewählt aus der Gruppe bestehend

- g1: organischen Polyisocyanaten,
- g2): modifizierten Polyisocyanaten,
- g3): NCO-Prepolymeren auf Basis von g1) und/oder g2) und einem Polyol x),
wobei das Polyol x) ausgewählt ist aus der Gruppe bestehend aus
- x1): Polyesterpolyolen,
- x2): Polyetheresterpolyolen und Gemischen aus x1 und x2),
- g4): und Gemischen aus g1), g2) und/oder g3) umgesetzt wird.

Vorzugsweise werden zur Herstellung der Polyetheresterpolyole a) bzw. x2) die organischen, z.B. aromatischen und vorzugsweise aliphatischen Polycarbonsäuren und/oder -derivate und Polyole katalysatorfrei oder in Gegenwart von Veresterungskatalysatoren, zweckmäßigerweise in einer Atmosphäre aus Inertgasen, wie z.B. Stickstoff, Helium, Argon, in Lösung und auch in der Schmelze bei Temperaturen von 150 bis 300°C, vorzugsweise 180 bis 230°C gegebenenfalls unter vermindertem Druck bis zu der gewünschten Säurezahl, die vorteilhafterweise kleiner als 10, vorzugsweise kleiner als 1 ist, polykondensiert.

Nach einem bevorzugten Herstellverfahren wird die Veresterungsreaktion solange unter Normaldruck gefahren bis sich kein Kondensat mehr bildet. Anschließend kann Katalysator zugesetzt werden. Unter einem Druck von weniger als 500 mbar, vorzugsweise 2 bis 150 mbar wird die Realtion vervollständigt. Als Veresterungskatalysatoren kommen beispielsweise Eisen-, Cadmium-, Kobalt-, Blei-, Zink-, Antimon-, Magnesium-, Titan- und Zinnkatalysatoren in Form von Metalloxiden oder Metallsalzen in Betracht. Die Polykondensation kann jedoch auch in Gegenwart von Verdünnungs- und/oder Schleppmitteln, wie z.B. Benzol, Toluol, Xylol oder Chlorbenzol, zur azeotropen Abtrennung des Kondensationswassers durchgeführt werden. Gemische der genannten Mittel sind ebenfalls gebräuchlich.

Zur Herstellung der Polyesterpolyole x1 werden vorzugsweise die organischen Polycarbonsäuren und/oder deren Derivate mit mehrwertigen Alkoholen vorteilhafterweise in einem solchen Mengenverhältnis eingesetzt, dass stets die Hydroxylgruppen zahlenmäßig im Überschuss gegenüber Carboxylgruppen bzw. Carboxylderivatgruppen vorliegen.

Bevorzugt werden die erfindungsgemäßen Polyurethanelastomere nach dem Prepolymer-Verfahren hergestellt, wobei zweckmäßigerweise das Prepolymer g3) durch Umsetzung mindestens eines Polyols oder mehrerer Polyole x) mit mindestens einem oder mehreren Isocyanaten g1) und gegebenenfalls modifizierten Isocyanaten g2) sowie gegebenenfalls kurzkettigen Polyolen a3) und/oder y) und/oder c) erhalten wird.

Zur Herstellung der erfindungsgemäßen, massiven oder mikrozellularen Polyurethanelastomeren werden vorzugsweise Isocyanate g), bestehend aus Komponente g1) mit gegebenenfalls Komponente g2) oder bevorzugt NCO-Prepolymer g3), mit mindestens einem Polyetheresterpolyol a) und niedermolekularen Kettenverlängerern und/oder Vernetzern c) gegebenenfalls unter Zugabe von Katalysatoren d), Treibmitteln e) und Zusatzstoffen f) umgesetzt.

Zur Herstellung der erfindungsgemäßen Polyurethanelastomeren werden die Komponenten in solchen Mengen zur Umsetzung gebracht, dass das Äquivalenzverhältnis der NCO-Gruppen der Isocyanate g) zur Summe der gegenüber Isocyanatgruppen reaktiven Wasserstoffe der Komponenten a), b), c), d) und f) sowie eventuell eingesetzter chemisch wirkender Treibmittel e) 0,8:1 bis 1,2:1, vorzugsweise 0,95:1 bis 1,5:1 und insbesondere 1,00:1 1 bis 1,05:1 beträgt.

Weiterhin werden alle Komponenten unter Berücksichtigung ihrer Isocyanat- und Hydroxylfunktionalitäten erfindungsgemäß so kombiniert, dass das resultierende Polyurethanelastomer eine Knotendichte zwischen 0,1 mol/kg und 0,0001 mol/kg, bevorzugt zwischen 0,001 und 0,08 mol/kg, besonders bevorzugt zwischen 0,01 und 0,04 mol/kg aufweist.

Die erfindungsgemäßen Polyurethanelastomere werden bevorzugt bei der Herstellung von Schuhteilen, insbesondere von Schuhsolen eingesetzt.

Die Erfindung soll anhand der nachfolgenden Beispiele näher erläutert werden.

### Beispiele

Das Polyurethanelastomer wurde durch äquivalente Umsetzung einer Polyolformulierung α und eines NCO-Prepolymers β (mittlere Funktionalität 2,01) erhalten. Die Zusammensetzung der Polyolformulierung α und des NCO-Prepolymers β können der Tabelle 2 entnommen werden. Die physikalischen Eigenschaften der erfindungsgemäßen Polyurethanelastomere sind in Tabelle 3 aufgelistet.

Die allgemeine Herstellungsvorschrift für die Polyetheresterpolyole wird beispielhaft am Polyetheresterpolyol C beschrieben:

In einem 101-Vierhalsrundkolben, ausgestattet mit einem Rührer, Füllkörperkolonne, absteigendem Kühler, Thermometer sowie einer Vakuumpumpe und Heizpilz, wurden 4662g (53,7 mol) eines hydroxyfunktionalisierten Polyethers P (Hydroxylzahl 28; zahlenmittlere Hydroxylfunktionalität 1,81; primäre Hydroxylgruppen 90 mol-%, (Propylenglykol als Starter; 68,7 Gew.-% Propylenoxid; 29,4 Gew.-% Ethylenoxid), 426 g (4 mol) Diethylenglykol, 417g (4,8 mol) Ethylenglykol, 767g (8,8 mol) 1,4-Butandiol, 15g (0,1 mol) Trimethylolpropan und 2461g (16,8 mol) Adipinsäure bis zur Schmelze erhitzt, wobei Stickstoff durch die Apparatur geleitet wurde. Man erhitzte solange auf 180°C bis sich kein Wasser mehr abschied. Danach wurden 200 mg Zinn(II)-chlorid zugegeben, langsam Vakuum angelegt und die Temperatur auf 200°C erhöht. Zur Vervollständigung der Reaktion wurde bei 200°C und 5 mbar für 2 Stunden nachgerührt. Man erhielt einen Polyetherester mit einer Säurezahl von 0,3, einer Hydroxylzahl von 34,6 und einer Viskosität von 930 mPa·s bei 75°C. Die Ausgangsverbindungen sowie die physikalischen Daten der Polyetheresterpolyole und der Polyesterpolyole sind Tabelle 1 zu entnehmen.

Die Herstellung der Polyurethanprüfkörper erfolgte derart, dass man die Polyolformulierung α bei 55°C in einer Niederdruck-Schäumanlage mit dem NCO-Prepolymer β bei 40°C mit einem Stachelmischer bei 3000 U/min vermischte, die Mischung in eine auf 50°C temperierte Aluminium-Klappform (Größe 200*140*10 mm) goss, die Klappform schloss und nach 3,5 Minuten das Polyurethanelastomer entformte.

Von den so hergestellten Polyurethanelastomer-Platten wurde die Shore A Härte nach DIN 53 505 nach 24 h Lagerung über Blaugel bestimmt. Weiterhin wurde die Stichaufweitung nach DIN 53 522 eines 2 mm breiten Durchstiches in der Biegelinie von Prüfkörpern (Maße 2 cm x 15 cm x 1 cm) unterklebt mit einem Texonstreifen nach 30 000 Biegezyklen ermittelt. Die Ergebnisse sind in der Tabelle 3 zusammengestellt. Die Dauerbiegeprüfungen wurden bei Raumtemperatur und bei -15°C durchgeführt. Außerdem wurden Prüfkörper 7 Tage bei 95% Luftfeuchte und 70°C gealtert, 24 Stunden bei 70°C getrocknet, weitere 24 Stunden bei Raumtemperatur rekonditioniert und anschließend bei Raumtemperatur einer Dauerbiegeprüfung unterzogen. Der Abrieb wurde nach DIN 53516 bestimmt und die Kraftstoffbeständigkeit nach EN 344 ermittelt.

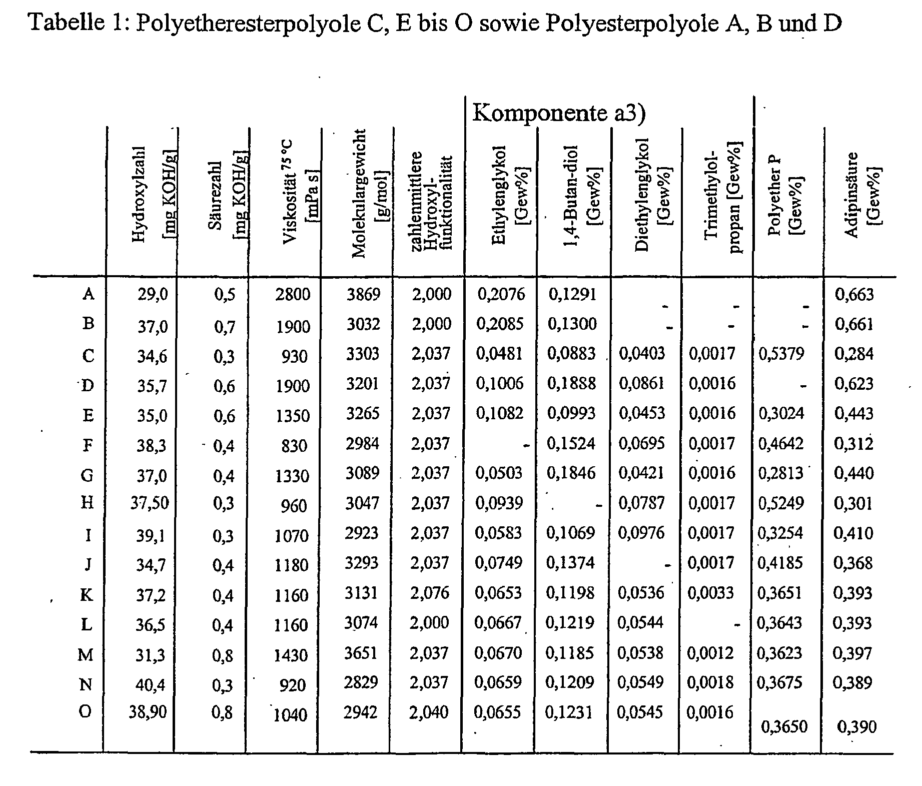

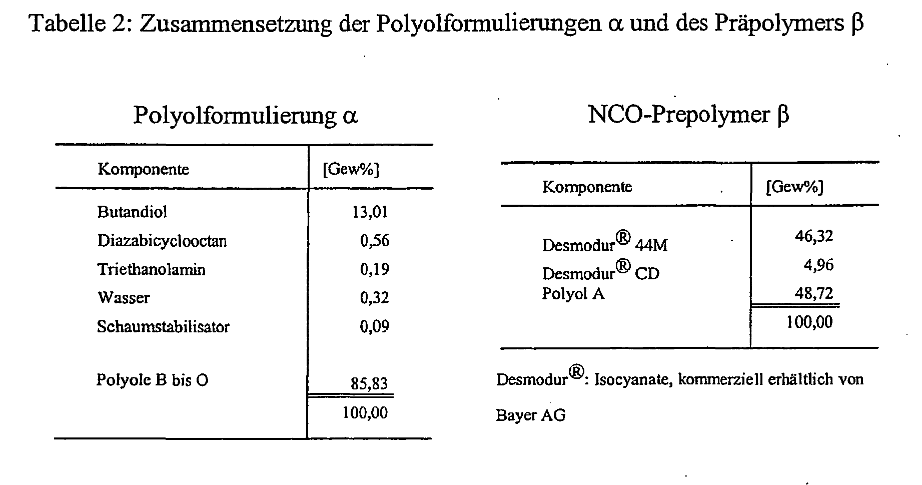

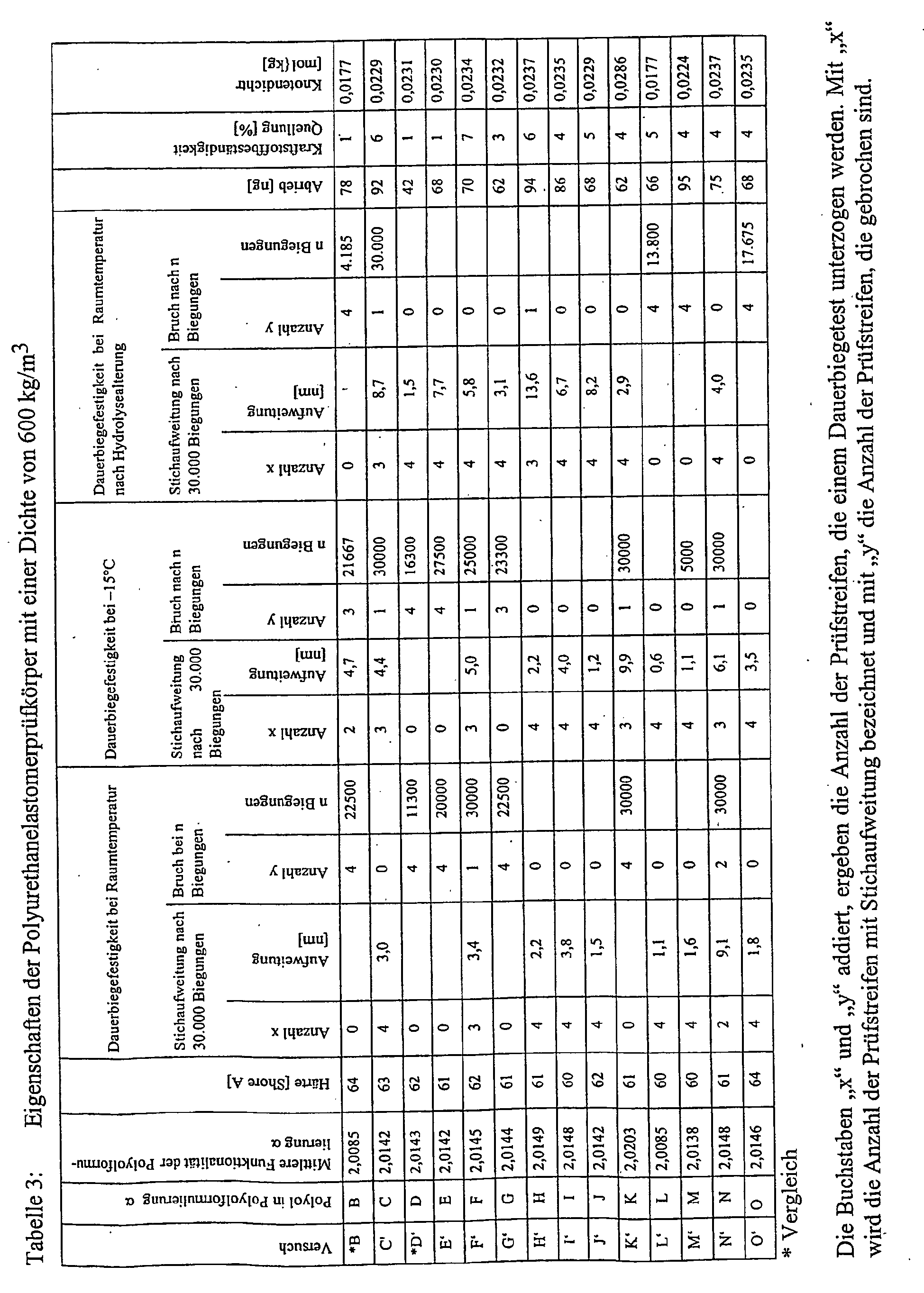

## Patentansprüche

1. Polyurethanelastomere, die eine Knotendichte von 0,1 mol/kg bis 0,0001 mol/kg aufweisen, erhältlich durch Umsetzung
a) mindestens eines Polyetheresterpolyols mit einem zahlenmittleren Molekulargewicht von 1000 g/mol bis 6000 g/mol einer zahlenmittleren Funktionalität von 1,9 bis 2,5 und einem Verhältnis von Ethergruppen zu Estergruppen des Polyetheresters von 0,3 bis 2,5,
der erhältlich ist durch Polykondensation aus
a1) mindestens einer oder mehrerer Dicarbonsäuren mit bis zu 12 Kohlenstoffatomen und/oder deren Derivaten,
a2) mindestens einem oder mehreren Polyetherpolyolen mit einem zahlenmittleren Molekulargewicht von 1000 g/mol bis 6000 g/mol, einer mittleren Funktionalität von 1,7 bis 2,5 sowie einem Anteil von 70 % bis 100 % primärer OH-Gruppen und
a3) mindestens einem oder mehreren Polyolen mit einem zahlenmittleren Molekulargewicht von 18 bis 750 g/mol einer zahlenmittleren Funktionalität von 2 bis 8 und mit mindestens 2 endständigen OH-Gruppen pro Molekül,
b) gegebenenfalls Polymerpolyolen, die OH-Zahl von 10 bis 149 und mittlere Funktionalitäten von 1,7 bis 4, aufweisen und die mit 1 bis 50 Gew.-% Füllstoffe, bezogen auf das Polymerpolyol enthalten
c) niedermolekularen Kettenverlängerern mit mittleren Funktionalitäten von 1,8 bis 2,1 und mit einem zahlenmittleren Molekulargewicht von 18 bis 750 g/mol und/oder Vernetzern mit mittleren Funktionalitäten von 2,2 bis 8 und mit einem zahlenmittleren Molekulargewicht von 18 bis 750 g/mol
in Gegenwart von
d) gegebenenfalls Katalysatoren,
e) gegebenenfalls Treibmitteln und
f) gegebenenfalls Zusatzstoffen
mit
g) mindestens einem Polyisocyanat ausgewählt aus der Gruppe bestgehend
g1) organischen Polyisocyanaten,
g2) modifizierten Polyisocyanaten,
g3) NCO-Prepolymeren auf Basis von g1) und/oder g2) und einem Polyol x),
wobei das Polyol x) ausgewählt ist aus der Gruppe bestehend aus
x1) Polyesterpolyolen,
x2) Polyetheresterpolyolen und
x3) Gemischen aus x1 und x2),
g4) und Gemischen aus g1), g2) und/oder g3).

2. Polyurethanelastomeren gemäß Anspruch 1, **dadurch gekennzeichnet, dass** das Polyisocyanat g1) 4,4'-Diphenylmethandiisocyanat, 2,4'-Diphenylmethandiisocyanat oder ein Gemisch daraus ist.

3. Polyurethanelastomere gemäß Anspruch 1, **dadurch gekennzeichnet, dass** das Polyol a3) aus der Gruppe bestehend aus 1,4-Butandiol, 1,2-Ethandiol, Diethylenglykol, Hexandiol, Trimethylolpropan, Sorbitan, Pentaerythrit, Triethanolamin und Glycerin ausgewählt ist.

4. Verfahren zur Herstellung der Polyurethanelastomeren gemäß den Ansprüchen 1 bis 3, **dadurch gekennzeichnet, dass**
a) mindestens ein Polyetheresterpolyol mit einem zahlenmittleren Molekulargewicht von 1000 g/mol bis 6000 g/mol einer zahlenmittleren Funktionalität von 1,9 bis 2,5 und einem Verhältnis von Ethergruppen zu Estergruppen des Polyetheresters von 0,3 bis 2,5,
der erhältlich ist durch Polykondensation aus
a1) mindestens einer oder mehrerer Dicarbonsäuren mit bis zu 12 Kohlenstoffatomen und/oder deren Derivaten,
a2) mindestens einem oder mehreren Polyetherpolyolen mit einem zahlenmittleren Molekulargewicht von 1000 g/mol bis 6000 g/mol, einer mittleren Funktionalität von 1,7 bis 2,5 sowie einem Anteil von 70 % bis 100 % primärer OH-Gruppen und
a3) mindestens einem oder mehreren Polyolen mit einem zahlenmittleren Molekulargewicht von 18 bis 750 g/mol einer zahlen- mittleren Funktionalität von 2 bis 8 und mit mindestens 2 endständigen OH-Gruppen pro Molekül,
b) gegebenenfalls Polymerpolyolen, die OH-Zahl von 10 bis 149 und mittlere Funktionalitäten von 1,7 bis 4, aufweisen und die mit 1 bis 50 Gew.-% Füllstoffe, bezogen auf das Polymerpolyol enthalten
c) niedermolekularen Kettenverlängerern mit mittleren Funktionalitäten von 1,8 bis 2,1 und mit einem zahlenmittleren Molekulargewicht von 18 bis 750 g/mol und/oder Vernetzern mit mittleren Funktionalitäten von 2,2 bis 8 und mit einem zahlenmittleren Molekulargewicht von 18 bis 750 g/mol,
in Gegenwart von
d) gegebenenfalls Katalysatoren,
e) gegebenenfalls Treibmitteln und
f) gegebenenfalls Zusatzstoffen
mit
g) mindestens einem Polyisocyanat ausgewählt aus der Gruppe bestehend
g1) organischen Polyisocyanaten,
g2) modifizierten Polyisocyanaten,
g3) NCO-Prepolymeren auf Basis von g1) und/oder g2) und einem Polyol x),
wobei das Polyol x) ausgewählt ist aus der Gruppe bestehend aus
x1) Polyesterpolyolen,
x2) Polyetheresterpolyolen und
x3) Gemischen aus x1 und x2),
g4) und Gemischen aus g1), g2) und/oder g3) umgesetzt wird.

5. Verwendung der Polyurethanelastomere gemäß Anspruch 1 bis 3 zur Herstellung von elastomeren Formteilen, insbesondere Schuhsohlen mit Dichten im Bereich von 180 bis 1200 kg/m³.

6. Elastomere Formteile für technische Artikel und Gebrauchsartikel, insbesondere Schuhsohlen aus Polyurethanelastomeren gemäß Anspruch 1 bis 3.

## Claims

1. Polyurethane elastomers which have a node density of from 0.1 mol/kg to 0.0001 mol/kg, obtainable via a reaction
a) of at least one polyetherester polyol with a number-average molar mass of from 1000 g/mol to 6000 g/mol with a number-average functionality of from 1.9 to 2.5 and with a ratio of ether groups to ester groups of the polyetherester of from 0.3 to 2.5, which is obtainable via polycondensation from
a1) one or more dicarboxylic acids having up to 12 carbon atoms and/or derivatives of these,
a2) one or more polyether polyols with a number-average molar mass of from 1000 g/mol to 6000 g/mol, with an average functionality of from 1.7 to 2.5, and also having a proportion of from 70% to 100% of primary OH groups and
a3) one or more polyols with a number-average molar mass of from 18 to 750 g/mol, with a number-average functionality of from 2 to 8 and having at least 2 terminal OH groups per molecule,
b) optionally polymer polyols which have an OH number of from 10 to 149 and average functionalities of from 1.7 to 4, and which comprise from 1 to 50% by weight of fillers, based on the polymer polyol,
c) low-molecular-weight chain extenders with average functionalities of from 1.8 to 2.1 and with a number-average molar mass of from 18 to 750 g/mol and/or crosslinking agents with average functionalities of from 2.2 to 8 and with a number-average molar mass of from 18 to 750 g/mol
in the presence of
d) optionally catalysts,
e) optionally blowing agents and
f) optionally additives
with
g) at least one polyisocyanate selected from the group consisting of
g1) organic polyisocyanates,
g2) modified polyisocyanates,
g3) NCO prepolymers based on g1) and/or g2) and a polyol x), where the polyol x) has been selected from the group consisting of x1) polyester polyols, x2) polyetherester polyols and x3) mixtures made up of x1) and x2)
g4) and mixtures made of g1), g2) and/or g3).

2. Polyurethane elastomers according to Claim 1, **characterized in that** the polyisocyanate g1) is diphenylmethane 4,4'-diisocyanate, diphenylmethane 2,4'-diisocyanate or a mixture thereof.

3. Polyurethane elastomers according to Claim 1, **characterized in that** the polyol a3) has been selected from the group consisting of 1,4-butanediol, 1,2-ethanediol, diethylene glycol, hexanediol, trimethylolpropane, sorbitan, pentaerythritol, triethanolamine and glycerol.

4. Process for producing the polyurethane elastomers according to Claims 1 to 3, **characterized in that**
a) at least one polyetherester polyol with a number-average molar mass of from 1000 g/mol to 6000 g/mol with a number-average functionality of from 1.9 to 2.5 and with a ratio of ether groups to ester groups of the polyetherester of from 0.3 to 2.5, which is obtainable via polycondensation from
a1) one or more dicarboxylic acids having up to 12 carbon atoms and/or derivatives of these,
a2) one or more polyether polyols with a number-average molar mass of from 1000 g/mol to 6000 g/mol, with an average functionality of from 1.7 to 2.5, and also having a proportion of from 70% to 100% of primary OH groups and
a3) one or more polyols with a number-average molar mass of from 18 to 750 g/mol, with a number-average functionality of from 2 to 8 and having at least 2 terminal OH groups per molecule,
b) optionally polymer polyols which have an OH number of from 10 to 149 and average functionalities of from 1.7 to 4, and which comprise from 1 to 50% by weight of fillers, based on the polymer polyol,
c) low-molecular-weight chain extenders with average functionalities of from 1.8 to 2.1 and with a number-average molar mass of from 18 to 750 g/mol and/or crosslinking agents with average functionalities of from 2.2 to 8 and with a number-average molar mass of from 18 to 750 g/mol
in the presence of
d) optionally catalysts,
e) optionally blowing agents and
f) optionally additives
are reacted with
g) at least one polyisocyanate selected from the group consisting of
g1) organic polyisocyanates,
g2) modified polyisocyanates,
g3) NCO prepolymers based on g1) and/or g2) and a polyol x), where the polyol x) has been selected from the group consisting of x1) polyester polyols, x2) polyetherester polyols and x3) mixtures made up of x1) and x2)
g4) and mixtures made of g1), g2) and/or g3).

5. Use of the polyurethane elastomers according to any of Claims 1 to 3 for producing elastomeric mouldings, in particular shoe soles with densities in the range from 180 to 1200 kg/m³.

6. Elastomeric mouldings for industrial items and consumer items, in particular shoe soles made of polyurethane elastomers according to any of Claims 1 to 3.

## Revendications

1. Elastomères de polyuréthane, qui présentent une densité de noeuds de 0,1 mole/kg à 0,0001 mole/kg, pouvant être obtenus par transformation
a) d'au moins un polyétheresterpolyol présentant un poids moléculaire numérique moyen de 1000 g/mole à 6000 g/mole, une fonctionnalité numérique moyenne de 1,9 à 2,5 et un rapport de groupes éther à groupes ester du polyétherester de 0,3 à 2,5, qui peut être obtenu par polycondensation de
a1) au moins un ou plusieurs acides dicarboxyliques comprenant jusqu'à 12 atomes de carbone et/ou leurs dérivés,
a2) au moins un ou plusieurs polyétherpolyols présentant un poids moléculaire numérique moyen de 1000 g/mole à 6000 g/mole, une fonctionnalité moyenne de 1,7 à 2,5 ainsi qu'une proportion de 70% à 100% de groupes OH primaires, et
a3) au moins un ou plusieurs polyols présentant un poids moléculaire numérique moyen de 18 à 750 g/mole, une fonctionnalité numérique moyenne de 2 à 8 et comprenant au moins 2 groupes OH en position terminale par molécule,
b) le cas échéant de polyols polymères, qui présentent un indice d'OH de 10 à 149 et des fonctionnalités moyennes de 1,7 à 4 et qui contiennent 1 à 50% en poids de charges par rapport au polyol polymère
c) d'agents d'allongement de chaîne de bas poids moléculaire présentant des fonctionnalités moyennes de 1,8 à 2,1 et un poids moléculaire numérique moyen de 18 à 750 g/mole et/ou de réticulants présentant des fonctionnalités moyennes de 2,2 à 8 et un poids moléculaire numérique moyen de 18 à 750 g/mole
en présence
d) le cas échéant de catalyseurs,
e) le cas échéant d'agents gonflants et
f) le cas échéant d'additifs,
avec
g) au moins un polyisocyanate choisi dans le groupe constitué par
g1) des polyisocyanates organiques
g2) des polyisocyanates modifiés,
g3) des prépolymères à fonction NCO à base de g1) et/ou g2) et d'un polyol x), où le polyol x) est choisi dans le groupe constitué par : x1) des polyesterpolyols, X2) des polyétheresterpolyols et x3) des mélanges de x1) et de x2),
g4) et des mélanges de g1), g2) et/ou g3).

2. Elastomères de polyuréthane selon la revendication 1, **caractérisés en ce que** le polyisocyanate g1) est le 4,4'-diphénylméthanediisocyanate, le 2,4'-diphénylméthanediisocyanate ou un mélange de ceux-ci.

3. Elastomères de polyuréthane selon la revendication 1, **caractérisés en ce que** le polyol a3) est choisi dans le groupe constitué par le 1,4-butanediol, le 1,2-éthanediol, le diéthylèneglycol, l'hexanediol, le triméthylolpropane, le sorbitane, le pentaérythritol, la triéthanolamine et le glycérol.

4. Procédé pour la préparation d'élastomères de polyuréthane selon les revendications 1 à 3, **caractérisé en ce qu'**on transforme
a) au moins un polyétheresterpolyol présentant un poids moléculaire numérique moyen de 1000 g/mole à 6000 g/mole, une fonctionnalité numérique moyenne de 1,9 à 2,5 et un rapport de groupes éther à groupes ester du polyétherester de 0,3 à 2,5, qui peut être obtenu par polycondensation de
a1) au moins un ou plusieurs acides dicarboxyliques comprenant jusqu'à 12 atomes de carbone et/ou leurs dérivés,
a2) au moins un ou plusieurs polyétherpolyols présentant un poids moléculaire numérique moyen de 1000 g/mole à 6000 g/mole, une fonctionnalité moyenne de 1,7 à 2,5 ainsi qu'une proportion de 70% à 100% de groupes OH primaires, et
a3) au moins un ou plusieurs polyols présentant un poids moléculaire numérique moyen de 18 à 750 g/mole, une fonctionnalité numérique moyenne de 2 à 8 et comprenant au moins 2 groupes OH en position terminale par molécule,
b) le cas échéant des polyols polymères, qui présentent un indice d'OH de 10 à 149 et des fonctionnalités moyennes de 1,7 à 4 et qui contiennent 1 à 50% en poids de charges par rapport au polyol polymère
c) des agents d'allongement de chaîne de bas poids moléculaire présentant des fonctionnalités moyennes de 1,8 à 2,1 et un poids moléculaire numérique moyen de 18 à 750 g/mole et/ou des réticulants présentant des fonctionnalités moyennes de 2,2 à 8 et un poids moléculaire numérique moyen de 18 à 750 g/mole
en présence
d) le cas échéant de catalyseurs,
e) le cas échéant d'agents gonflants et
f) le cas échéant d'additifs,
avec
g) au moins un polyisocyanate choisi dans le groupe constitué par
g1) des polyisocyanates organiques
g2) des polyisocyanates modifiés,
g3) des prépolymères à fonction NCO à base de g1) et/ou g2) et d'un polyol x), où le polyol x) est choisi dans le groupe constitué par : x1) des polyesterpolyols, x2) des polyétheresterpolyols et x3) des mélanges de x1) et de x2),
g4) et des mélanges de g1), g2) et/ou g3).

5. Utilisation des élastomères de polyuréthane selon la revendication 1 à 3 pour la préparation de pièces moulées élastomères, en particulier de semelles de chaussures présentant des densités dans la plage de 180 à 1200 kg/m³.

6. Pièces moulées élastomères pour objets techniques et objets d'usage courant, en particulier pour semelles de chaussures en élastomères de polyuréthane selon la revendication 1 à 3.
